# EUROPEAN PATENT APPLICATION

(11) **EP 4 451 768 A1**
(43) Date of publication of application: **23.10.2024**
(21) Application number: 22906499.3
(22) Date of filing: 12.12.2022
(51) Int. Cl.: H04W 72/04

(54) **SIDELINK POSITIONING REFERENCE SIGNAL TRANSMITTING METHOD AND APPARATUS, AND SIDELINK POSITIONING REFERENCE SIGNAL RECEIVING METHOD AND APPARATUS**

(30) Priority: 13.12.2021 CN 202111521928
(71) Applicant: Datang Mobile Communications Equipment Co., Ltd., Beijing 100085 (CN)
(72) Inventor: REN, Xiaotao, Beijing 100085 (CN); REN, Bin, Beijing 100085 (CN)
(74) Representative: Studio Torta S.p.A.
(86) International application number: PCT/CN2022/138387
(87) International publication number: WO 2023/109754

(57) **Abstract**

The present disclosure relates to the technical field of communications. Provided are a sidelink positioning reference signal (S-PRS) transmitting method and apparatus, and an S-PRS receiving method and apparatus. The S-PRS transmitting method of the present disclosure comprises: a first terminal performing resource-sensing by means of detecting sidelink control information (SCI) transmitted by a second terminal, or determining a first resource by means of random selection in a first resource pool; and the first terminal sending an S-PRS on the first resource, wherein the first resource pool is a dedicated resource pool for randomly selecting a transmission resource for the S-PRS.

## Description

### CROSS-REFERENCE TO RELATED APPLICATION

This application claims priority to Chinese Patent Application No. 202111521928.0, filed on December 13, 2021, the disclosure of which is hereby incorporated herein by reference in its entirety.

### TECHNICAL FIELD

The present disclosure relates to the field of communications technologies, and in particular, to a sidelink positioning reference signal transmission method, a sidelink positioning reference signal receiving method, and apparatuses.

### BACKGROUND

In a New Radio (NR) positioning technology of the related art, a downlink positioning reference signal and an uplink positioning reference signal are only defined in an air interface between a base station and a terminal, and a sidelink positioning reference signal (S-PRS) is not defined in a PC5 interface (a terminal-to-terminal communication interface) between a terminal a the terminal.

Considering relative positioning between the terminals, that is, the requirement of sidelink positioning, a sidelink positioning reference signal transmitted between the terminals needs to be introduced, so that the terminal may directly complete the relative positioning process between the terminals in the sidelink without relying on the base station. However, before sending the S-PRS, the terminal needs to first determine a time-frequency resource used for S-PRS transmission. In this way, how to determine S-PRS transmission resources has become an urgent problem to be solved at present.

### SUMMARY

An objective of the present disclosure is to provide a sidelink positioning reference signal transmission method, a sidelink positioning reference signal receiving method, a sidelink positioning reference signal transmission apparatus and a sidelink positioning reference signal receiving apparatus, to resolve a problem of how to implement S-PRS transmission for sidelink positioning.

To achieve the foregoing objective, a method of transmitting a sidelink positioning reference signal method is provided. The method includes: determining a first resource by a first terminal through performing resource-sensing on detecting sidelink control information (SCI) transmitted by a second terminal, or through random selection in a first resource pool; transmitting a sidelink positioning reference signal (S-PRS) on the first resource, wherein the first resource pool is a dedicated resource pool for randomly selecting a transmission resource of the S-PRS.

Optionally, determining the first resource by the first terminal through detecting performing resource-sensing on detecting the SCI transmitted by the second terminal includes: obtaining indication information included in the SCI by the first terminal, wherein the indication information is configured to indicate information related to the transmission resource of the S-PRS; determining one or more second resources by the first terminal based on the information related to the transmission resource; determining the first resource by the first terminal based on the one or more second resources.

Optionally, the information related to the transmission resource includes at least one of following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

Optionally, determining the one or more second resources by the first terminal based on the information related to the transmission resources includes: obtaining the one or more second resources by the first terminal through the information related to the transmission resource and reference signal received power (RSRP) information.

Optionally, obtaining the one or more second resources by the first terminal through the information related to the transmission resource and the reference signal received power (RSRP) information includes: using one or more third resources in resources other than a resource corresponding to the information related to the transmission resource as the one or more second resources by the first terminal, wherein the one or more third resources include: an unoccupied resource, and/or an occupied resource having the RSRP less than a first threshold.

Optionally, determining the first resource by the first terminal based on the one or more second resources includes: selecting the first resource in the one or more second resources by the first terminal through random selection; or obtaining the first resource by the first terminal through received signal strength indication (RSSI) information of the one or more second resources.

Optionally, obtaining the first resource by the first terminal through the RSSI information of the one or more second resources includes: sorting all of the one or more second resources based on the RSSI of the one or more second resources by the first terminal to obtain a sorting result; determining one or more fourth resources based on the sorting result, wherein an RSSI of any resource in the one or more fourth resources is less than an RSSI of another resource other than the one or more fourth resources in the one or more second resources; selecting the first resource from the one or more fourth resources through random selection by the first terminal.

Optionally, the resource-sensing includes at least one of following: full sensing; periodic partial sensing; continuous partial sensing.

Optionally, performing the resource-sensing on detecting the SCI transmitted by the second terminal by the first terminal includes detecting the SCI transmitted by the second terminal by the first terminal in all slots in a case that the resource-sensing is the full sensing.

Optionally, determining the first resource by the first terminal through performing the resource-sensing on detecting the SCI transmitted by the second terminal includes detecting the SCI transmitted by the second terminal on a first sensing occasion by the first terminal in a case that the resource-sensing is the periodic partial sensing, wherein the first sensing occasion is a duration or a slot that occurs based on a sensing period.

Optionally, determining the first resource by the first terminal through performing the resource-sensing on detecting the SCI transmitted by the second terminal includes: detecting the SCI transmitted by the second terminal by the first terminal on a second sensing occasion in a case that the resource-sensing is the continuous partial sensing, wherein the second sensing occasion is a specific duration or slot.

Optionally, the method further includes: determining whether to determine the first resource by the first terminal through the resource-sensing or the random selection according to at least one of following: a sensing capability of the first terminal; positioning delay requirement information; energy-saving requirement information; priority information; resource congestion information.

Optionally, the first resource pool is orthogonal to a second resource pool, and the second resource pool is a dedicated resource pool for determining the transmission resource of the S-PRS through the resource-sensing.

In order to achieve the above technical purpose, a method of receiving a sidelink positioning reference signal is provided. The method includes receiving a sidelink positioning reference signal (S-PRS) by a second terminal; wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

Optionally, the resource-sensing includes at least one of following: full sensing; or periodic partial sensing; or continuous partial sensing.

In order to achieve the above technical purpose, an apparatus of transmitting a sidelink positioning reference signal is further provided. The apparatus includes: a memory, a transceiver, and a processor; wherein the memory is configured to store a program instruction; the transceiver is configured to transmit and receive data under control of the processor; the processor is configured to read the program instruction in the memory and perform following: determining a first resource through performing resource-sensing on detecting sidelink control information (SCI) transmitted by a second terminal, or through random selection in a first resource pool; controlling the transceiver to transmitg a sidelink positioning reference signal (S-PRS) on the first resource, wherein the first resource pool is a dedicated resource pool for randomly selecting a transmission resource of the S-PRS.

Optionally, the processor is configured to read the program instruction in the memory and further perform following: obtaining indication information included in the SCI, wherein the indication information is configured to indicate information related to the transmission resource of the S-PRS; determining one or more second resources based on the information related to the transmission resource; determining the first resource based on the one or more second resources.

Optionally, the information related to the transmission resource includes at least one of following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

Optionally, the processor is configured to read the program instruction in the memory and further perform following: obtaining the one or more second resources through the information related to the transmission resource and reference signal received power (RSRP) information.

Optionally, the processor is configured to read the program instruction in the memory and further perform following: using one or more third resources in resources other than a resource corresponding to the information related to the transmission resource as the one or more second resources, wherein the one or more third resources include: an unoccupied resource, and/or an occupied resource having the RSRP less than a first threshold.

Optionally, the processor is configured to read the program instruction in the memory and further perform following: selecting the first resource in the one or more second resources through random selection; or obtaining the first resource through received signal strength indication (RSSI) information of the one or more second resources.

Optionally, the processor is configured to read the program instruction in the memory and further perform following: sorting all of the one or more second resources based on the RSSI of the one or more second resources to obtain a sorting result; determining one or more fourth resources based on the sorting result, wherein an RSSI of any resource in the one or more fourth resources is less than an RSSI of another resource other than the one or more fourth resources in the one or more second resources; selecting the first resource from the one or more fourth resources through random selection.

Optionally, the resource-sensing includes at least one of following: full sensing; periodic partial sensing; continuous partial sensing.

Optionally, the processor is configured to read the program instruction in the memory and further perform following: detecting the SCI transmitted by the second terminal in all slots in a case that the resource-sensing is the full sensing.

Optionally, the processor is configured to read the program instruction in the memory and further perform following: detecting the SCI transmitted by the second terminal on a first sensing occasion in a case that the resource-sensing is the periodic partial sensing, wherein the first sensing occasion is a duration or a slot that occurs based on a sensing period.

Optionally, the processor is configured to read the program instruction in the memory and further perform following: detecting the SCI transmitted by the second terminal on a second sensing occasion in a case that the resource-sensing is the continuous partial sensing, wherein the second sensing occasion is a specific duration or slot.

Optionally, the processor is configured to read the program instruction in the memory and further perform following: determining whether to determine the first resource through the resource-sensing or the random selection according to at least one of following: a sensing capability of the first terminal; positioning delay requirement information; energy-saving requirement information; priority information; resource congestion information.

Optionally, the first resource pool is orthogonal to a second resource pool, and the second resource pool is a dedicated resource pool for determining the transmission resource of the S-PRS through the resource-sensing.

In order to achieve the above technical purpose, an apparatus of transmitting a sidelink positioning reference signal is provided. The apparatus includes: a first processing module, configured to determine a first resource through performing resource-sensing on detecting sidelink control information (SCI) transmitted by a second terminal, or through random selection in a first resource pool; a transmitting module, configured to transmit a sidelink positioning reference signal (S-PRS) on the first resource, wherein the first resource pool is a dedicated resource pool for randomly selecting a transmission resource of the S-PRS.

Optionally, the first processing module includes: an obtaining submodule, configured to obtain indication information included in the SCI, wherein the indication information is configured to indicate the information related to the transmission resource of the S-PRS; a first processing submodule, configured to determine one or more second resources according to the information related to the transmission resource of the S-PRS; a second processing submodule, configured to determine the first resource according to the one or more second resources.

Optionally, the information related to the transmission resource includes at least one of following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

Optionally, the first processing submodule is further configured to: obtain the one or more second resources through the information related to the transmission resource and reference signal received power (RSRP) information.

Optionally, the first processing submodule is further configured to: use one or more third resources in resources other than a resource corresponding to the information related to the transmission resource as the one or more second resources, wherein the one or more third resources include: an unoccupied resource, and/or an occupied resource having the RSRP less than a first threshold.

Optionally, the second processing submodule is further configured to: select the first resource in the one or more second resources through random selection; or obtaining the first resource through received signal strength indication (RSSI) information of the one or more second resources.

Optionally, the second processing submodule includes: a first processing unit, configured to sort all of the one or more second resources based on the RSSI of the one or more second resources to obtain a sorting result; a second processing unit, configured to determine one or more fourth resources based on the sorting result, wherein an RSSI of any resource in the one or more fourth resources is less than an RSSI of another resource other than the one or more fourth resources in the one or more second resources; a third processing unit, configured to select the first resource from the one or more fourth resources through random selection.

Optionally, the resource-sensing includes at least one of following: full sensing; periodic partial sensing; continuous partial sensing.

Optionally, the first processing module includes: a third processing submodule, configured to detect the SCI transmitted by the second terminal in all slots in a case that the resource-sensing is the full sensing.

Optionally, the first processing module includes a fourth processing submodule, configured to detect the SCI transmitted by the second terminal on a first sensing occasion in a case that the resource-sensing is the periodic partial sensing, wherein the first sensing occasion is a duration or a slot that occurs based on a sensing period.

Optionally, the first processing module includes: a fifth processing submodule, configured to detect the SCI transmitted by the second terminal on a second sensing occasion in a case that the resource-sensing is the continuous partial sensing, wherein the second sensing occasion is a specific duration or slot.

Optionally, the apparatus further includes: a second processing module, configured to determine whether to determine the first resource through the resource-sensing or the random selection according to at least one of following: a sensing capability of the first terminal; positioning delay requirement information; energy-saving requirement information; priority information; resource congestion information.

Optionally, the first resource pool is orthogonal to a second resource pool, and the second resource pool is a dedicated resource pool for determining the transmission resource of the S-PRS through the resource-sensing.

In order to achieve the above technical purpose, an apparatus of receiving a sidelink positioning reference signal is provided. The apparatus includes: a memory, a transceiver, and a processor; wherein the memory is configured to store a program instructions; the transceiver configured to transmit and receive data under control of the processor; the processor is configured to read the program instruction in the memory, and the transceiver is configured to perform following: receiving a sidelink positioning reference signal (S-PRS); wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

Optionally, the resource-sensing includes at least one of following: full sensing; periodic partial sensing; continuous partial sensing.

In order to achieve the above technical purpose, an apparatus of receiving a sidelink positioning reference signal is provided. The apparatus includes: a receiving module, configured to receive a sidelink positioning reference signal (S-PRS); wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

Optionally, the resource-sensing includes at least one of following: full sensing; periodic partial sensing; continuous partial sensing.

In order to achieve the above technical purpose, a processor-readable storage medium is further provided, wherein the processor-readable storage medium stores a computer program, and the computer program is configured to cause the processor to perform the method of transmitting a sidelink positioning reference signal according to the above, or the method of receiving a sidelink positioning reference signal according to the above.

The above technical solutions of the present disclosure have at least the following beneficial effects:

In the above technical solutions of the embodiments of the present disclosure, on the one hand, the first terminal can determine the first resource through performing resource-sensing on detecting the SCI transmitted by the second terminal; and on the other hand, the first terminal can determine the first resource through random selection in the first resource pool (the dedicated resource pool for random selection of transmission resources of the S-PRS). Then, the S-PRS is transmitted on the determined first resource, so that the receiving terminal with the positioning requirement performs positioning after receiving the S-PRS through the first resource.

### BRIEF DESCRIPTION OF THE DRAWINGS

FIG. 1 is a schematic diagram of S-PRS positioning according to an embodiment of the present disclosure;
FIG. 2 is a schematic flowchart of a sidelink positioning reference signal transmission method according to an embodiment of the present disclosure;
FIG. 3 is a first schematic diagram of determining a first resource according to an embodiment of the present disclosure;
FIG. 4 is a second schematic diagram of determining a first resource according to an embodiment of the present disclosure;
FIG. 5 is a schematic diagram of random selection of resources according to an embodiment of the present disclosure;
FIG. 6 is a schematic diagram of full sensing according to an embodiment of the present disclosure;
FIG. 7 is a schematic diagram of periodic partial sensing according to an embodiment of the present disclosure;
FIG. 8 is a schematic diagram of continuous partial sensing according to an embodiment of the present disclosure;
FIG. 9 is a schematic structural diagram of a sidelink positioning reference signal transmission apparatus according to an embodiment of the present disclosure;
FIG. 10 is a schematic module diagram of a sidelink positioning reference signal transmission apparatus according to an embodiment of the present disclosure;
FIG. 11 is a schematic flowchart of a sidelink positioning reference signal receiving method according to an embodiment of the present disclosure;
FIG. 12 is a schematic structural diagram of a sidelink positioning reference signal receiving apparatus according to an embodiment of the present disclosure;
FIG. 13 is a schematic block diagram of a sidelink positioning reference signal receiving apparatus according to an embodiment of the present disclosure.

### DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. Obviously, the described embodiments are only part, rather than all, of the embodiments of the present application. All other embodiments obtained by a person of ordinary skill in the art based on the embodiments of the present disclosure without creative efforts shall fall within the protection scope of the present disclosure.

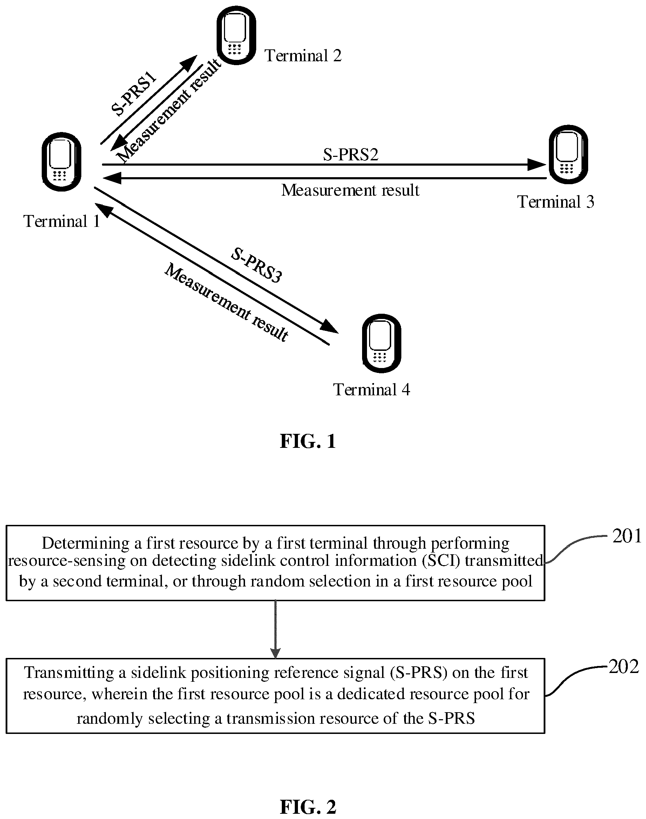

It should be understood that in this embodiment, in a PC5 interface between a terminal and another terminal, a S-PRS is introduced, so that the terminals may directly complete the positioning procedure in the sidelink without relying on the base station. For example, as shown in FIG. 1, after a terminals sends the S-PRS to terinsl 2~4 and the terminals 2~4 receive the S-PRS, the terminals 2~4 sends the measurement result to the terminal 1 to assist the terminal 1 in completing positioning.

Embodiments of the present disclosure provide a sidelink positioning reference signal transmission method and apparatus, and a terminal. The method and the apparatus are based on the same application concept, and because the method and the apparatus solve a similar principle of a problem, the implementation of the apparatus and the method may refer to each other, and details are not described herein again.

As shown in FIG. 2, a method of transmitting a sidelink positioning reference signal provided by an embodiment of the present disclosure includes steps 201-202.

Step 201: determining, by a first terminal, a first resource through performing resource-sensing on detecting sidelink control information (SCI) transmitted by a second terminal, or through random selection in a first resource pool.

Step 202: transmitting a sidelink positioning reference signal S-PRS on the first resource by the first terminal.

The first resource pool is a dedicated resource pool for random selection of transmission resources of the S-PRS.

In this way, according to the foregoing step 201, on one hand, the first terminal can determine the first resource through performing resource-sensing on detecting the Sidelink Control Information (SCI) transmitted by the second terminal; and on the other hand, determine the first resource through random selection in the first resource pool (the dedicated resource pool for random selection of transmission resources of the S-PRS). Then, according to step 202, the S-PRS is transmitted on the first resource determined in step 201, so that the receiving terminal with the positioning requirement receives the S-PRS through the first resource and then performs positioning.

It should be appreciated that in this embodiment, resource-sensing is sensing of S-PRS resources. S-PRS resource-sensing is implemented based on SCI.

Optionally, determining, by the first terminal, the first resource through performing resource-sensing on detecting the sidelink control information SCI transmitted by the second terminal includes:
obtaining, by the first terminal, indication information included in the SCI, where the indication information is configured to indicate information related to the transmission resources of the S-PRS;
determining, by the first terminal, one or more second resources based on the information related to the transmission resources; and
determining, by the first terminal, the first resource based on the one or more second resources.

Here, the second terminal is a receiving terminal of the S-PRS transmitted by the first terminal. The second terminal transmits the SCI before the first terminal transmits the S-PRS, to guide the resource used by the first terminal to transmit the S-PRS, so as to prevent transmission of the S-PRS by the first terminal from being interfered.

One implementation of the indication information is information related to the transmission resources of the S-PRS, that is, the SCI carries the information related to the transmission resources of the S-PRS. The first resource and the one or more second resources may be a resource or a resource set.

In this way, the first terminal performs S-PRS resource-sensing, specifically: the first terminal detects the SCI in a data packet transmitted by another terminal (a second terminal), obtains time-frequency resource usage information (i.e., information related to the transmission resources) of the S-PRS, and determines, by using the information, a candidate time-frequency resource set that can be used by the first terminal to transmit the S-PRS, where the candidate time-frequency resource set is a first time-frequency resource set (i.e., one or more second resources), and then a second time-frequency resource set (i.e., a first resource) may be determined from the first time-frequency resource set, for example, a transmission time-frequency resource set of the S-PRS is selected from the first time-frequency resource set, where the transmission time-frequency resource set is the second time-frequency resource set.

Certainly, the first terminal may also transmit the SCI including the indication information, so that other terminals determine the transmission resources of the S-PRS used by the first terminal.

Optionally, the information related to the transmission resource includes at least one of the following:
time-frequency information of a resource;
an index of a resource;
a period of a resource;
priority information of a resource.

Here, the time-frequency information of the resource may include at least one of: a start Physical Resource Block (PRB) position, a bandwidth of the resource, a quantity of occupied symbols, a size of a comb tooth of the occupied symbol, and the like. The index of the resource may include at least one type of information such as a start symbol index, a resource set index, and a resource index.

In this embodiment, specifically, the time-frequency information, the index, the period, and the priority information correspond to the transmission resources of the SRS, that is, the information related to the transmission resource includes at least one of time-frequency information of the transmission resources of the SRS, an index of the transmission resources of the SRS, a period of the transmission resources of the SRS, and priority information of the transmission resources of the SRS. The time-frequency information of the transmission resources of the SRS may include at least one of a start PRB position of the S-PRS, a bandwidth of the transmission resources of the SRS, the number of symbols occupied by the S-PRS, a size of a comb tooth of a symbol occupied by the S-PRS, and the like. The index of the transmission resources of the SRS may include at least one of an S-PRS start symbol index, an S-PRS resource set index, an S-PRS resource index, and the like.

Certainly, the information related to the transmission resources may further include time-frequency information, an index, a period, and priority information of other signal transmission resources other than the S-PRS. Optionally, the information related to the transmission resources is transmitted in a first field added in a first SCI format, or is transmitted in a second SCI format, and the second SCI format is dedicated to the information related to the transmission resources.

The first SCI format may be a SCI Format 1A/2A/2B, and the second SCI Format may be a SCI Format 3.

Therefore, in this embodiment, on one hand, a new field (the first field) may be added to the SCI Format 1A/2A/2B, and the information related to the transmission resources of the S-PRS is indicated by using the field.

For example, in order to enable the terminal A to obtain the information of the S-PRS transmitted by the terminal B in a resource-sensing manner, the terminal B needs to add a new field in the SCI (such as a SCI Format 2A) transmitted by the terminal B, to indicate the time-frequency information of the transmission resources of the SRS, the index of the transmission resources of the SRS, the period of the transmission resources of the SRS, the priority information of the transmission resources of the SRS, and the like.

The newly added field in the SCI Format 2A includes the information shown in Table 1 below:

**TABLE 1**

| SCI format | Existing information in SCI format | Newly added information in SCI format |
|---|---|---|
| SCI format 2A | - Hybrid Automatic Repeat reQuest, HARQ process ID | - Start PRB position and bandwidth of S-PRS |
| | - New data indication | - Start symbol index of S-PRS, the number of occupied symbols, and a size of a comb tooth of S-PRS |
| | - Redundancy Version indication | |
| | - Source identification ID | - Period of S-PRS |
| | - Target identification ID | - Resource set index of S-PRS |
| | - HARQ feedback indication information | - Resource index of S-PRS |
| | - Broadcast type indication information | |
| | - Channel State Indication (CSI) request information | |

In this way, the terminal A detects the information related to the transmission resource of the S-PRS in the SCI Format 2A transmitted by the terminal B through resource-sensing, so that the time-frequency resources occupied by the S-PRS transmitted by the terminal B can be obtained, the time-frequency resource conflict between the S-PRSs transmitted by the terminals is avoided, and the sidelink positioning precision of the terminals is improved.

On the other hand, the new SCI format (for example, SCI format 3) indicates the information related to the transmission resources of the S-PRS. For example, in order to enable the terminal A to obtain the information of the S-PRS transmitted by the terminal B in a resource-sensing manner, the SCI (such as the SCI Format 3) transmitted by the terminal B needs to carry at least one of the time-frequency information of the transmission resources of the SRS, the index of the transmission resources of the SRS, the period of the transmission resources of the SRS, the positioning priority information of the transmission resources of the SRS, and the like.

The information included in the SCI Format 3 is shown in Table 2 below:

**TABLE 2**

| SCI format | Information related to a transmission resource of S-PRS needed to be included in a new SCI format |
|---|---|
| SCI format 3 | - Start PRB position and bandwidth of S-PRS |
| | - Start symbol index of S-PRS, the number of occupied symbols, and a size of a comb tooth |
| | - Period of S-PRS |
| | - Resource set index of S-PRS |
| | - Resource index of S-PRS |

Therefore, the terminal A detects, through resource-sensing, the information related to the transmission resources of the S-PRS in the SCI Format 3 transmitted by the terminal B, so that the time-frequency resource occupied by the S-PRS transmitted by the terminal B can be obtained, the time-frequency resource conflict between the S-PRSs transmitted by the terminals is avoided, and the sidelink positioning precision of the terminals is improved.

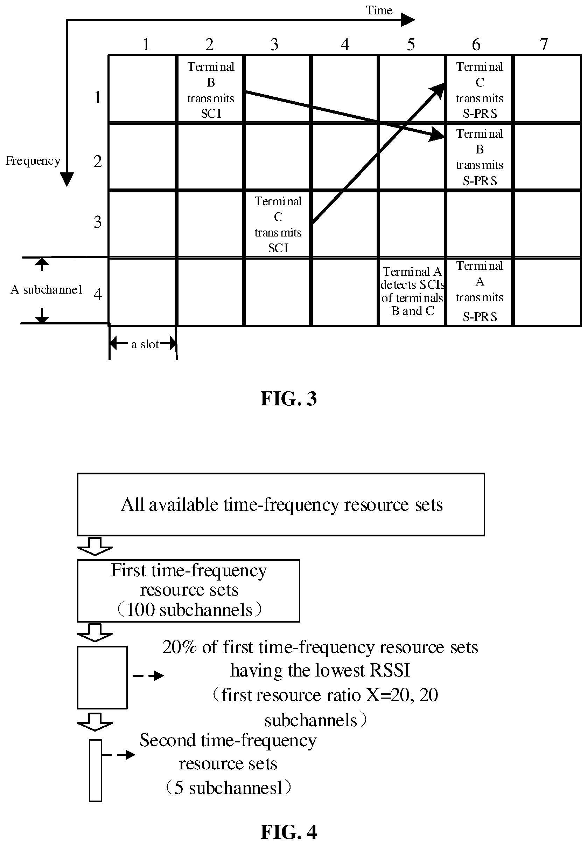

In this embodiment, the first terminal can determine the one or more second resources by detecting the SCI transmitted by the second terminal and based on the information related to the transmission resources indicated by the indication information in the SCI. For example, resources corresponding to the information related to the transmission resources are excluded from the one or more second resources according to the information related to the transmission resource. As shown in FIG. 3, a subchannel is a frequency domain unit allocated for a sidelink resource, and one subchannel is composed of one or more consecutive PRBs in a frequency domain. The terminal B transmits the SCI on the sub-channel # 1 and the slot #2, the terminal C transmits the SCI on the sub-channel #3 and the slot #3, and the two SCIs respectively indicate that the resource on the sub-channel # 6 and the slot #2 and the resource on the sub-channel # 6 and the slot #1 are respectively used by the terminal B and the terminal C to transmit the S-PRSs. Before the terminal A transmits the S-PRS, in order to avoid interference caused by mutual conflict of time-domain resources occupied by the S-PRSs since other terminals have occupied the transmission resources of the S-PRS, the terminal A performs S-PRS resource-sensing in the slot #5 before transmitting the S-PRS in the slot #6, that is, the terminal A detects SCI in the data packet transmitted by other terminals (the terminal B and the terminal C) and obtains that the time-frequency resource usage information of the S-PRSs of the terminal B and the terminal C are the slot #6 and the sub-channel #1 and the slot # 6 and the sub-channel #2, respectively. In this way, the terminal A determines the candidate time-frequency resource set (the one or more the second resources), i.e., the first time-frequency resource set (i.e., {sub-channel 3, sub-channel 4}, that can be used by the terminal A to transmit the S-PRS. Then, the transmission time-frequency resource set (the first resource), i.e., the second time-frequency resource set {sub-channel 4}, of the S-PRS can be selected from the first time-frequency resource set.

In addition, optionally, in this embodiment, determining the one or more second resources based on the information related to the transmission resource by the first terminal includes: obtaining the one or more second resources through the information related to the transmission resources and the reference signal receiving power (RSRP).

Here, the information of the Reference Signal Receiving Power (RSRP) may be understood as the RSRP of the resource occupied by the data packet received from the second terminal. In other words, the first terminal may further determine the one or more second resources in combination with the information related to the transmission resource and the RSRP.

For example, if the first terminal receives the data packet transmitted by the at least one terminal in one or more second terminals, the first terminal can determine the one or more second resources in combination with the information related to the transmission resource corresponding to the second terminal and the RSRP of the resource occupied by the data packet.

Optionally, the obtaining, by the first terminal, the one or more second resources by using the information related to the transmission resource and the reference signal received power RSRP includes:
using, by the first terminal, one or more third resources in resources other than a resource corresponding to the information related to the transmission resource as the one or more second resources; wherein the one or more third resources include: a resource that is not occupied, and/or an occupied resource having a RSRP less than a first threshold.

In other words, in addition to the resource corresponding to the information related to the transmission resources, other resources that are not occupied and/or occupied resources having a RSRP less than the first threshold may also be used as candidate resources for transmitting the S-PRS by the first terminal. Therefore, based on the information related to the transmission resource, in resources other than a resource corresponding to the information related to the transmission resources, if a certain resource is occupied and the RSRP of the certain resource is lower than the first threshold, or if the certain resource is not occupied, then the certain resource is added into the one or more second resources by the first terminal.

The first threshold, i.e. the RSRP threshold, is used to determine the conflict resource. Certainly, it may also be understood as determining whether there is a resource conflict. If the RSRP of a resource of the terminal B received by the terminal A is higher than or equal to the first threshold, it is considered that the resource is a conflict resource and constitutes interference, and the resource needs to be excluded from the one or more second resources; otherwise, if the RSRP of a certain resource of the terminal B received by the terminal A is lower than the first threshold, it is considered that the resource is not a conflict resource, does not constitute interference, and does not need to exclude the resource from the one or more second resources.

Optionally, the first threshold has the following configuration manners:
SCI configuration; target signaling (for example, Radio Resource Control (RRC) signaling) configuration; pre-configuration.

Specifically, it is assumed that the pre-configured first threshold is -65 dBm, and after the terminal A receives the data packet transmitted by the terminal B, the terminal A first determines whether there is resource conflict according to the first threshold, and if the RSRP of the resource occupied by the data packet is greater than or equal to -65 dBm, it can be determined that the resource is strongly interfered, and if the terminal A also uses the resource to transmit the S-PRS, the S-PRS cannot be correctly received, and therefore, the terminal A needs to exclude the resource from the one or more second resources; otherwise, if the RSRP of the resource occupied by the data packet transmitted by the terminal B and received by the terminal A is less than -65dBm, that is, it may be determined that the resource does not have severe interference, and if the terminal A also uses the resource to transmit the S-PRS, correct reception of the S-PRS is not affected, so the resource needs not be excluded from the one or more second resources. In this way, the terminal A determines an appropriate second resource based on information such as the first threshold, thereby avoiding a time-frequency resource conflict between the sidelink positioning reference signals transmitted by the terminals, and improving the precision of sidelink positioning performed by the terminal.

Certainly, for a resource for transmitting the S-PRS by the second terminal (that is, the resource corresponding to the information related to the transmission resource), the comparison between the RSRP of the resource and the third threshold may be further used to determine whether the resource may be used as the second resource, for example, the resource whose RSRP is less than the third threshold is determined as the one or more second resources. Here, configuration and usage of the third threshold may be similar to the first threshold, and the third threshold may be the same as or different from the first threshold.

In this embodiment, after the one or more second resources are determined, the first resource may be determined based on the one or more second resources. Optionally, the determining, by the first terminal, the first resource based on the one or more second resources includes:
selecting, by the first terminal, the first resource in the one or more second resources through random selection; or
obtaining the first resource by the first terminal through Received Signal Strength Indication (RSSI) information of one or more second resources.

That is, the first terminal may randomly select a resource from the one or more second resources as the first resource, for example, select N resources as the first resource based on a preset quantity N (N is a positive integer).

Considering that the second resources are not subject to strong interference after the above screening, the second resources will still be subject to weak interference from other users. Therefore, in this embodiment, the interference level to which the resources are subject is judged by RSSI information, and the first terminal can also select an applicable resource as the first resource according to the RSSI information of the one or more second resources.

Optionally, obtaining the first resource through the received signal strength indication RSSI information of the one or more second resources by the first terminal includes:
sorting all resources of the one or more second resources based on the RSSI of the one or more second resources to obtain a sorting result by the first terminal;
determining one or more fourth resources based on the sorting result by the first terminal, wherein the RSSI of any resource in the one or more fourth resources is less than the RSSI of other resources in the one or more second resources except the one or more fourth resources;
selecting the first resource from the one or more fourth resources through random selection by the first terminal.

In other words, all resources in the one or more second resources may be sorted according to the RSSI by the first terminal, and the sorting manner may be from large to small or from small to large; then, one or more resources in the one or more second resources may be determined as the one or more fourth resources according to the sorting result, and the RSSI of the one or more fourth resources is less than the RSSI of other resources other than the one or more fourth resources in the one or more second resources; and then, a resource is further randomly selected from the one or more fourth resources as the first resource.

A ratio of a quantity of resources in the one or more fourth resources to a quantity of resources in the one or more second resources is a second threshold, that is, X% resources (a second threshold) with minimum RSSIs from the one or more second resources may be used as the one or more fourth resources. Here, X is a positive integer, X ≧ 1 and X ≦ 99

For example, as shown in FIG. 4, it is assumed that the terminal A determines that the first time-domain resource set (the second resources) has 100 subchannels, and the second time-domain resource set (the first resource) needs 5 sub-channels. In order to transmit the S-PRS through resources with less interference, the terminal A may set a first resource ratio (second threshold) X = 20, then sort the RSSIs of the 100 sub-channels in the first time-domain resource set, randomly select 5 subchannels as the second time-frequency resource set from 20 subchannels with minimum RSSIs, which are 20% of the 100 subchannels, and then transmit the S-PRS on the 5 subchannels, so as to obtain the minimum interference effect. In this way, the terminal A determines an appropriate second time-frequency resource set according to the first resource ratio and the RSSI information, thereby avoiding a time-frequency resource conflict between the sidelink positioning reference signals transmitted by the terminals, and improving the precision of sidelink positioning performed by the terminal.

Optionally, in this embodiment, before step 201, the method further includes:
determining, by the first terminal, whether to determine the first resource through the resource-sensing or the random selection according to at least one of the following:
a sensing capability of the first terminal;
positioning delay requirement information;
energy-saving requirement information;
priority information;
resource congestion information.

That is, in different scenarios, the terminal has different positioning delay requirements, energy saving requirements, different S-PRS transmission priorities, and different S-PRS transmission resource congestion conditions, and therefore, the first terminal flexibly selects an appropriate S-PRS resource selection manner according to these different requirements and conditions to determine the first resource. In this way, the requirements of different scenes can be met, the time-frequency resource conflict between the sidelink positioning reference signals transmitted by the terminals can be avoided, and the sidelink positioning precision of the terminal is improved.

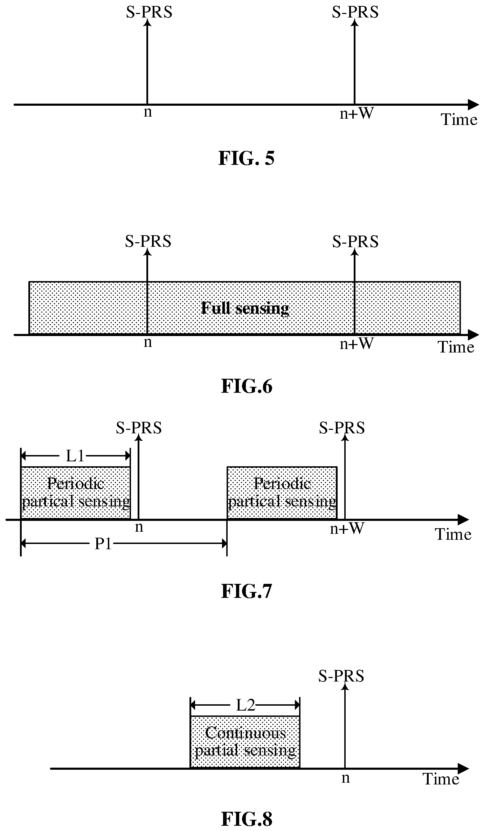

For example, if the timing delay requirement of the terminal is very high, it is required to complete positioning in 3 slots, then the first terminal has no spare time to perform S-PRS resource-sensing and detects SCIs of other terminals, but can only use a random selection manner to randomly select transmission resources of the S-PRS from all the available resources, and then transmit the S-PRS at an n time instant and an n + W (S-PRS period) time instant, as shown in FIG. 5, before the requirement of low positioning delay can be met.

Certainly, a manner of selecting an appropriate S-PRS resource includes but is not limited to the foregoing information, which is not listed one by one herein.

In addition, in this embodiment, optionally, the resource-sensing includes at least one of the following: full sensing; periodic partial sensing; continuous partial sensing.

In this embodiment, full sensing may be understood as S-PRS full sensing, which means that the terminal performs S-PRS resource-sensing in all slots. In this way, optionally, performing resource-sensing by the first terminal on detecting the sidelink control information SCI transmitted by the second terminal includes:
when the resource-sensing is full sensing, detecting the SCI transmitted by the second terminal in all slots by the first terminal.

In this way, the first terminal always performs S-PRS resource-sensing in all slots, and then determines the occupied time-frequency resource (the first resource) of the S-PRS according to the result of the S-PRS resource-sensing, and then the first terminal transmits the S-PRS on the first resource.

For example, for the periodicity S-PRS, it is assumed that the period of transmitting the S-PRS by the first terminal is W, and then the first terminal transmits the S-PRS at the time instant n and the time instant n + W, respectively. As shown in FIG. 6, since the first terminal always performs a sensing operation, then before the S-PRS is transmitted at time instants n and n+W, the first resource may be determined according to the previous sensing result. Full sensing is applicable to a terminal having a capability of receiving a data packet and thus having a sensing capability, and having no energy-saving and power-saving requirements.

In this embodiment, the periodic partial sensing may be understood as S-PRS periodic part sensing, which means that the terminal periodically performs S-PRS resource-sensing. In this way, optionally, the determining, by the first terminal, the first resource through performing resource-sensing on detecting the sidelink control information SCI transmitted by the second terminal includes:
detecting, by the first terminal, SCI transmitted by the second terminal in a first sensing occasion in a case that the resource-sensing is periodic partial sensing, where the first sensing occasion is a duration or a slot that occurs based on a sensing period.

The sensing period is denoted as P1; the first sensing occasion is denoted as L1, and is a duration or a quantity of slots of resource-sensing of each sensing occasion. As shown in FIG. 7, the first terminal only performs S-PRS resource-sensing in some time periods (the first sensing occasion), and these partial periods occur periodically, and these periods are referred to as partial sensing occasions. Optionally, the configuration of the first sensing occasion is before the instant at which the terminal transmits the S-PRS, so that the terminal determines the first resource based on the sensing result. The periodic partial sensing is applicable to the case in which the terminal has the capability of receiving the data packet and accordingly the terminal has a sensing capability, and the terminal has an energy-saving and power-saving requirement, and the S-PRS is periodically transmitted.

In this embodiment, the continuous partial sensing may be understood as S-PRS continuous partial sensing, which means that the terminal completes one-time S-PRS resource-sensing in continuous slots. In this way, optionally, the determining, by the first terminal, the first resource through performing resource-sensing on detecting the sidelink control information SCI transmitted by the second terminal includes:
detecting, by the first terminal, SCI transmitted by the second terminal on a second sensing occasion in a case that the resource-sensing is continuous partial sensing, where the second sensing occasion is a specific duration or specific slots.

The second sensing occasion is denoted as L2, and is a continuous duration or a quantity of slots for continuous resource-sensing. As shown in FIG. 8, the first terminal only performs S-PRS resource-sensing in a time period (the second sensing occasion), and the time period appears continuously for one time. Optionally, configuration of the second sensing occasion is before a time instant at which the terminal transmits the S-PRS. The continuous partial sensing is applicable to the case in which the terminal has the capability of receiving the data packet and accordingly the terminal has a sensing capability, and the terminal has an energy-saving and power-saving requirement, and the S-PRS is not transmitted periodically.

It should be noted that the terminal does not necessarily select a fixed resource selection manner according to its sensing capability, the energy-saving requirement, or the periodicity of the S-PRS, but may flexibly consider various factors to select a resource selection manner. For example, for the periodic S-PRS, the terminal may alternatively use a continuous partial sensing manner for a purpose of power saving. For a terminal having a sensing capability, in order to reduce a delay, a random selection manner may also be selected.

Certainly, regardless of whether the first terminal determines the first resource based on the first sensing result, the second sensing result, or the third sensing result, the first terminal may determine the one or more second resources based on the information related to the transmission resource of the S-PRS, and then further determine the first resource based on the one or more second resources. The specific content is described above, and details are not described herein again.

In this embodiment, the random selection/full-sensing/periodic partial sensing/continuous partial sensing of the transmission resources of the SRS enables the first terminal to determine the occupied time-frequency resources of the S-PRSs transmitted by other terminals, thereby avoiding a time-frequency resource conflict between the sidelink positioning reference signals transmitted by the terminals, and improving the precision of sidelink positioning performed by the terminal.

In addition, optionally, in this embodiment, the first resource pool is orthogonal to the second resource pool, and the second resource pool is a dedicated resource pool used for resource-sensing to determine transmission resources of the S-PRS.

In this way, in this embodiment, before step 201, the method further includes: determining an S-PRS transmission resource pool, where the SRS transmission resource pool is dedicated to transmission of the S-PRS.

Certainly, if the first terminal determines the first resource in a resource-sensing manner, the determined S-PRS transmission resource pool is the second resource pool, and then the first terminal performs resource-sensing by detecting the SCI transmitted by the second terminal, and determines the first resource in the second resource pool. If the second terminal determines the first resource through random selection, the determined S-PRS transmission resource pool is the first resource pool, and then the first terminal determines the first resource in the first resource pool through random selection.

Since the SRS transmission resource pool is dedicated to transmission of the S-PRS, the SRS transmission resource SRS pool is not used to transmit signals or channels other than the S-PRS, such as a physical sidelink shared channel (PSSCH) or a physical sidelink control channel (PSCCH).

Optionally, the first resource pool is preconfigured or configured. The second resource pool is pre-configured or configured.

Here, in order to avoid interference of other signals or channels on the S-PRS, the SRS transmission resource pool dedicated to transmission of the S-PRS is configured for the first terminal in a preconfigured or configured manner.

In summary, according to the method in the embodiments of the present disclosure, on one hand, the first terminal can determine the first resource by performing resource-sensing on detecting the SCI transmitted by the second terminal; and on the other hand, the first terminal can determine the first resource by random selection in the first resource pool (the dedicated resource pool for random selection of transmission resources of the S-PRS). Then, the S-PRS is transmitted on the determined first resource, so that the first terminal may complete the transmission of the S-PRS by using a suitable S-PRS resource, so that the receiving terminal with the positioning requirement is accurately positioned.

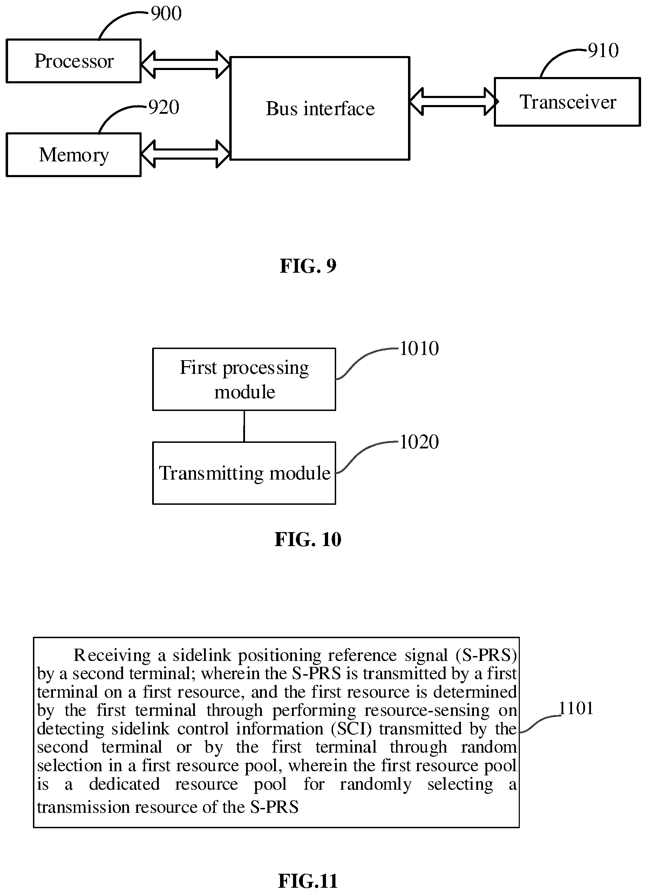

As shown in FIG. 9, an embodiment of the present disclosure further provides an apparatus of transmitting a sidelink positioning reference signal. The apparatus includes a memory 920, a transceiver 910, and a processor 900. The memory 920 is configured to store program instructions; the transceiver 910 is configured to transmit and receive data under control of the processor 900; and the processor 900 is configured to read the program instructions in the memory 920 and perform the following operations:
determining a first resource through performing resource-sensing by detecting sidelink control information (SCI) transmitted by a second terminal, or through random selection in a first resource pool;
controlling the transceiver to transmit a sidelink positioning reference signal (S-PRS) on the first resource, wherein the first resource pool is a dedicated resource pool for randomly selecting a transmission resource of the S-PRS.

Optionally, the processor 900 is configured to read the program instructions in the memory 920 and perform the following operations::
obtaining indication information included in the SCI, wherein the indication information is configured to indicate information related to the transmission resource of the S-PRS;
determining one or more second resources based on the information related to the transmission resource;
determining the first resource based on the one or more second resources.

Optionally, the information related to the transmission resource includes at least one of the following:
time-frequency information of the resource;
an index of the resource;
a period of the resource;
priority information of the resource.

Optionally, the information related to the transmission resource is transmitted in a first field added in a first SCI format, or transmitted in a second SCI format and the second SCI format is dedicated to the information related to the transmission resource.

Optionally, the processor 900 is configured to read the program instructions in the memory 920 and perform the following operations:
obtaining the one or more second resources through the information related to the transmission resource and a reference signal received power.

Optionally, the processor 900 is configured to read the program instructions in the memory 920 and perform the following operations:
using one or more third resources in resources other than a resource corresponding to the information related to the transmission resource as the one or more second resources, wherein the one or more third resources include: an unoccupied resource, and/or an occupied resource having the RSRP less than a first threshold.

Optionally, the processor 900 is configured to read the program instructions in the memory 920 and further perform the following operations:
selecting the first resource in the one or more second resources through random selection; or
obtaining the first resource through a received signal strength indication (RSSI) of the one or more second resources.

Optionally, the processor 900 is configured to read the program instructions in the memory 920 and further perform the following operations:
sorting all of the one or more second resources based on the RSSI of the one or more second resources to obtain a sorting result;
determining one or more fourth resources based on the sorting result, wherein an RSSI of any resource in the one or more fourth resources is less than an RSSI of another resource other than the one or more fourth resources in the one or more second resources;
selecting the first resource from the one or more fourth resources through random selection.

Optionally, the resource-sensing includes at least one of the following:
full sensing; periodic partial sensing; or continuous partial sensing.

Optionally, the processor 900 is configured to read the program instructions in the memory 920 and further perform the following operations:
detecting the SCI transmitted by the second terminal in all slots in a case that the resource-sensing is the full sensing.

Optionally, the processor 900 is configured to read the program instructions in the memory 920 and further perform the following operations:
detecting the SCI transmitted by the second terminal on a first sensing occasion in a case that the resource-sensing is the periodic partial sensing, wherein the first sensing occasion is a duration or one or more slots that occur based on a sensing period.

Optionally, the processor 900 is configured to read the program instructions in the memory 920 and further perform the following operations:
detecting the SCI transmitted by the second terminal on a second sensing occasion in a case that the resource-sensing is the continuous partial sensing, wherein the second sensing occasion is a specific duration or specific slots.

Optionally, the processor 900 is configured to read the program instructions in the memory 920 and further perform the following operations:
determining whether to determine the first resource through the resource-sensing or the random selection according to at least one of following:
a sensing capability of the first terminal;
positioning delay requirement information;
energy-saving requirement information;
priority information;
resource congestion information.

Optionally, the first resource pool is orthogonal to a second resource pool, and the second resource pool is a dedicated resource pool for determining the transmission resource of the S-PRS through the resource-sensing.

In FIG. 9, the bus architecture may include any number of interconnected buses and bridges, and specifically, various circuits such as one or more processors represented by the processor 900 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 910 may be a plurality of elements, that is, includes a transmitter and a receiver, and provides units for communicating with various other apparatuses on a transmission medium, where the transmission mediums include transmission media such as a wireless channel, a wired channel, and an optical cable. The processor 900 is responsible for managing the bus architecture and general processing, and the memory 920 may store data used by the processor 910 when performing operations.

The processor 900 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

In the apparatus of the embodiments of the present disclosure, the first resource, that is, the resource suitable for transmitting the S-PRS, can be first determined through resource-sensing or random selection; and then the S-PRS is transmitted on the first resource, so that the first terminal can complete the transmission of the S-PRS through the appropriate S-PRS resource, so that the receiving terminal with the positioning requirement is accurately positioned.

It should be noted that, the foregoing apparatus provided in the embodiments of the present disclosure can implement all method steps implemented in the foregoing embodiment of the method of transmitting a sidelink positioning reference signal, and can achieve the same technical effect, and details of the same parts and beneficial effects as those in the method embodiments in this embodiment are not described herein again.

As shown in FIG. 10, an implementation of the present disclosure further provides an apparatus of transmitting a sidelink positioning reference signal. The apparatus includes:
a first processing module 1010, configured to determine a first resource through performing resource-sensing by detecting sidelink control information (SCI) transmitted by a second terminal, or through random selection in a first resource pool;
a transmitting module 1020, configured to transmit a sidelink positioning reference signal (S-PRS) on the first resource, wherein the first resource pool is a dedicated resource pool for randomly selecting a transmission resource of the S-PRS.

Optionally, the first processing module includes:
an obtaining submodule, configured to obtain indication information included in the SCI, wherein the indication information is configured to indicate information related to the transmission resource of the S-PRS;
a first processing submodule, configured to determine one or more second resources based on the information related to the transmission resource;
a second processing submodule, configured to determine the first resource by the first terminal based on the one or more second resources.

Optionally, the information related to the transmission resource includes at least one of the following:
time-frequency information of the resource;
an index of the resource;
a period of the resource;
priority information of the resource.

Optionally, the information related to the transmission resource is transmitted in a first field added in a first SCI format, or transmitted in a second SCI format and the second SCI format is dedicated to the information related to the transmission resource.

Optionally, the first processing submodule is further configured to:
obtain the one or more second resources through the information related to the transmission resource and a reference signal received power (RSRP).

Optionally, the first processing submodule is further configured to:
use one or more third resources in resources other than a resource corresponding to the information related to the transmission resource as the one or more second resources, wherein the one or more third resources include: an unoccupied resource, and/or an occupied resource having the RSRP less than a first threshold.

Optionally, the second processing submodule is further configured to:
select the first resource in the one or more second resources through random selection; or
obtain the first resource through a received signal strength indication (RSSI) of the one or more second resources..

Optionally, the second processing submodule includes:
a first processing unit, configured to sort all of the one or more second resources based on the RSSI of the one or more second resources to obtain a sorting result;
a second processing unit, configured to determine one or more fourth resources based on the sorting result, wherein an RSSI of any resource in the one or more fourth resources is less than an RSSI of another resource other than the one or more fourth resources in the one or more second resources;
a third processing unit, configured to select the first resource from the one or more fourth resources through random selection.

Optionally, the resource-sensing includes at least one of the following: the resource-sensing includes: full sensing; or periodic partial sensing; or continuous partial sensing

Optionally, the first processing module includes: a third processing submodule, configured to detect the SCI transmitted by the second terminal in all slots in a case that the resource-sensing is the full sensing.

Optionally, the first processing module includes: a fourth processing submodule, configured to detect the SCI transmitted by the second terminal on a first sensing occasion by the first terminal in a case that the resource-sensing is the periodic partial sensing, wherein the first sensing occasion is a duration or a slot that occurs based on a sensing period.

Optionally, the first processing module includes: a fifth processing submodule, configured to detect the SCI transmitted by the second terminal on a second sensing occasion in a case that the resource-sensing is the continuous partial sensing, wherein the second sensing occasion is a specific duration or specific slots.

Optionally, the apparatus further includes: a second processing module, configured to determine whether to determine the first resource through the resource-sensing or the random selection according to at least one of following:
a sensing capability of the first terminal;
positioning delay requirement information;
energy-saving requirement information;
priority information;
resource congestion information.

Optionally, the first resource pool is orthogonal to a second resource pool, and the second resource pool is a dedicated resource pool for determining the transmission resource of the S-PRS through the resource-sensing.

In the apparatus of the embodiments of the present disclosure, on one hand, the first resource can be determined through performing resource-sensing by detecting the SCI transmitted by the second terminal; and on the other hand, the first resource can be determined by random selection in the first resource pool (the dedicated resource pool for random selection of transmission resources of the S-PRS). Then, the S-PRS is transmitted on the determined first resource, so that the receiving terminal with the positioning requirement performs positioning after receiving the S-PRS through the first resource.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, an essential part, or all, or part of the technical solutions of the present application may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program codes, such as a USB flash drive, a removable hard disk, a read-only memory (ROM), a random access memory (RAM), a magnetic disk, or an optical disk.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

In some embodiments of the present disclosure, a processor-readable storage medium is further provided, where the processor-readable storage medium stores program instructions, and the program instructions are configured to cause the processor to perform the steps in the foregoing embodiment of the method of transmitting the sidelink positioning reference signal.

When the program instructions are executed by the processor, all implementations of the foregoing method embodiments applied to the first terminal side shown in FIG. 2 can be implemented, and details are not described herein in order to avoid repetition.

As shown in FIG. 11, an embodiment of the present disclosure further provides a method of receiving a sidelink positioning reference signal. The method includes:
step 1101: receiving a sidelink positioning reference signal (S-PRS) by a second terminal;
wherein the S-PRS is transmitted by a first terminal on a first resource, and the first resource is determined by the first terminal through performing resource-sensing by detecting sidelink control information (SCI) transmitted by the second terminal or is determined by the first terminal through random selection in a first resource pool, wherein the first resource pool is a dedicated resource pool for randomly selecting a transmission resource of the S-PRS.

Correspondingly, after step 1101, the second terminal performs positioning based on the received S-PRS.

In this way, because the first resource is a resource that is determined by the first terminal through resource-sensing or random selection and that is applicable to transmit the S-PRS, the first terminal may complete transmission of the S-PRS by using an appropriate S-PRS resource, and the second terminal receives the S-PRS, and then may perform accurate positioning based on the received S-PRS. The first terminal detects the SCI transmitted by the second terminal to perform resource-sensing; and the first terminal randomly selects the first resource in the first resource pool.

Optionally, the resource-sensing includes at least one of the following: full sensing; periodic partial sensing; continuous partial sensing.

Optionally, the method further includes: transmitting the SCI, where the SCI includes indication information, and the indication information is configured to indicate information related to the transmission resources of the S-PRS, so that the first terminal determines one or more second resources based on the information related to the transmission resource, and determines the first resource based on the one or more second resources.

Optionally, the information related to the transmission resource includes at least one of the following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

It should be noted that the method is implemented in cooperation with the method of transmitting the sidelink positioning reference signal, and the implementation of the embodiments of the transmitting method is applicable to the receiving method, and can also achieve the same technical effect.

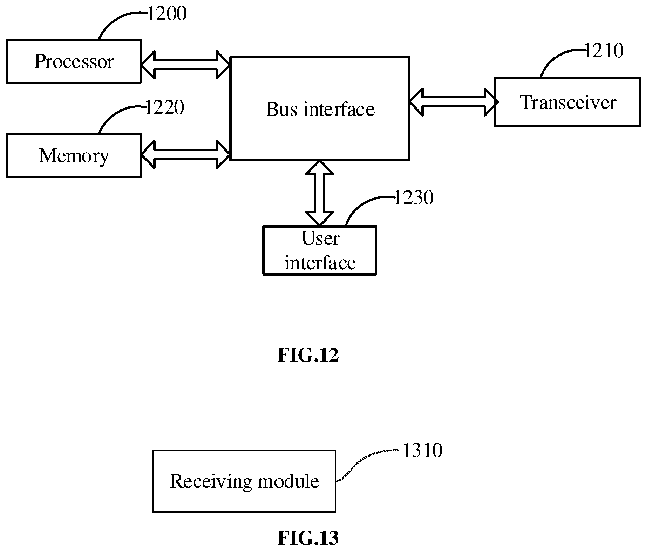

As shown in FIG. 12, an implementation of the present disclosure further provides an apparatus of receiving a sidelink positioning reference signal. The apparatus includes: a memory 1220, a transceiver 1210, and a processor 1200. The memory 1220 is configured to store program instructions; the transceiver 1210 is configured to transmit and receive data under control of the processor 1200; and the processor 1200 is configured to read the program instructions in the memory 1220, where the transceiver 1210 is configured to perform the following operations:
receiving a sidelink positioning reference signal (S-PRS); wherein the S-PRS is transmitted by a first terminal on a first resource, and the first resource is determined by the first terminal through performing resource-sensing by detecting sidelink control information (SCI) transmitted by the second terminal or is determined by the first terminal through random selection in a first resource pool, wherein the first resource pool is a dedicated resource pool for randomly selecting a transmission resource of the S-PRS.

Optionally, the resource-sensing includes at least one of the following: full sensing; periodic partial sensing; continuous partial sensing.

Optionally, the transceiver 1210 is configured to transmit the SCI, where the SCI includes indication information, and the indication information is configured to indicate information related to the transmission resources of the S-PRS, so that the first terminal determines one or more second resources based on the information related to the transmission resource, and determines the first resource based on the one or more second resources.

Optionally, the information related to the transmission resource includes at least one of the following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

In FIG. 12, the bus architecture may include any number of interconnected buses and bridges, and specifically, various circuits such as one or more processors represented by the processor 1200 and a memory represented by the memory 1220 are linked together. The bus architecture may also link various other circuits, such as a peripheral device, a voltage regulator, and a power management circuit, which are well known in the art, and therefore are not further described herein. The bus interface provides an interface. The transceiver 1210 may be a plurality of elements, that is, includes a transmitter and a receiver, and provides units for communicating with various other apparatuses on a transmission medium, where the transmission mediums include transmission media such as a wireless channel, a wired channel, and an optical cable. For different user equipment, the user interface 1230 may also be an interface capable of being externally connected to an internal required device, and the connected device includes but is not limited to a keypad, a display, a speaker, a microphone, a joystick, and the like.

The processor 1200 is responsible for managing the bus architecture and general processing, and the memory 1220 may store data used by the processor 1200 when performing operations.

Optionally, the processor 1200 may be a central processing unit (CPU), an application-specific integrated circuit (ASIC), a field-programmable gate array (FPGA), or a complex programmable logic device (CPLD), and the processor 1200 may also adopt a multi-core architecture.

The processor 1200 is configured to invoke the program instructions stored in the memory, to perform any one of the methods provided in the embodiments of the present disclosure according to the obtained executable instructions. The processor 1200 and the memory 1220 may also be physically separated.

In the apparatus of the embodiments of the present disclosure, the S-PRS transmitted by using the first resource is received. Because the first resource is a resource applicable to transmit the S-PRS determined by the first terminal through resource-sensing or the random selection, the first terminal can complete the transmission of the S-PRS through the appropriate S-PRS resource, and the second terminal receives the S-PRS, and then can complete accurate positioning based on the received S-PRS.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 13, an implementation of the present disclosure further provides an apparatus of receiving a sidelink positioning reference signal. The apparatus includes: a receiving module 1310, configured to receive a sidelink positioning reference signal S-PRS; wherein the S-PRS is transmitted by a first terminal on a first resource, and the first resource is determined by the first terminal through performing resource-sensing by detecting sidelink control information (SCI) transmitted by the second terminal or is determined by the first terminal through random selection in a first resource pool, wherein the first resource pool is a dedicated resource pool for randomly selecting a transmission resource of the S-PRS.

Optionally, the resource-sensing includes at least one of the following: full sensing; periodic partial sensing; continuous partial sensing.

Optionally, the apparatus further includes an SCI transmitting module, configured to transmit the SCI, where the SCI includes indication information, and the indication information is configured to indicate information related to the transmission resources of the S-PRS, so that the first terminal determines one or more second resources based on the information related to the transmission resource, and determines the first resource based on the one or more second resources.

Optionally, the information related to the transmission resource includes at least one of the following: time-frequency information of the resource; an index of the resource; a period of the resource; priority information of the resource.

Optionally, the information related to the transmission resource is transmitted in a first field added in a first SCI format, or transmitted in a second SCI format and the second SCI format is dedicated to the information related to the transmission resource.

In the apparatus of the embodiments of the present disclosure, the S-PRS transmitted by using the first resource is received. Because the first resource is a resource that is determined by the first terminal through resource-sensing or random selection and is applicable to transmit the S-PRS, the first terminal may complete transmission of the S-PRS by using an appropriate S-PRS resource, and the second terminal receives the S-PRS, and then can perform accurate positioning based on the received S-PRS. The first terminal detects the SCI transmitted by the second terminal to perform resource-sensing; and the first terminal randomly selects the first resource in the first resource pool.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, an essential part, or a part, or all, of technical solutions of the present disclosure may be embodied in the form of a software product, and the software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program codes, such as a USB flash drive, a removable hard disk, a read-only memory (ROM), a random access memory (RAM), a magnetic disk, or an optical disk.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

In some embodiments of the present disclosure, a processor-readable storage medium is further provided, where the processor-readable storage medium stores program instructions, and the program instructions are configured to cause the processor to perform the steps of the method of receiving the sidelink positioning reference signal as described above:

When the program instructions are executed by the processor, all implementations of the foregoing method embodiments applied to the second terminal side shown in FIG. 11 can be implemented, and details are not described herein in order to avoid repetition.

The technical solutions provided in the embodiments of the present disclosure may be applied to various systems, in particular, a 5th generation mobile communication (5 th-generation, 5G) system. For example, the applicable system may be a Global System of Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), Worldwide Interoperability for Microwave Access (WiMAX) systems, 5G new air interface systems, and the like. The plurality of systems each include a terminal device and a network device. The system may further include a core network part, for example, an Evolved Packet System (EPS), a 5G system (5G System, 5 GS), or the like.

The terminal in the embodiments of the present disclosure may be a device that provides voice and/or data connectivity to a user, a handheld device having a wireless connection function, or another processing device connected to a wireless modem. In different systems, the names of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may use a form of a computer program product implemented on one or more computer-usable storage media

### (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, a module may be a separately established processing element, or may be integrated in a chip of the foregoing apparatus, or may be stored in a memory of the apparatus in a form of program codes, and a processing element of the foregoing apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program codes. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the terms used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A alone exist, B alone exists, C alone exists, and both A and B exist, both B and C exist, both A and C exist, and A, B and C all exist. Similarly, use of "at least one of A and B" in this specification and claims should be understood as "A alone, B alone, or both A and B".

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A method of transmitting a sidelink positioning reference signal method, comprising:
determining a first resource by a first terminal through performing resource-sensing on detecting sidelink control information (SCI) transmitted by a second terminal, or through random selection in a first resource pool;
transmitting a sidelink positioning reference signal (S-PRS) on the first resource, wherein the first resource pool is a dedicated resource pool for randomly selecting a transmission resource of the S-PRS.

2. The method according to claim 1, wherein determining the first resource by the first terminal through detecting performing resource-sensing on detecting the SCI transmitted by the second terminal comprises:
obtaining indication information comprised in the SCI by the first terminal, wherein the indication information is configured to indicate information related to the transmission resource of the S-PRS;
determining one or more second resources by the first terminal based on the information related to the transmission resource;
determining the first resource by the first terminal based on the one or more second resources.

3. The method according to claim 2, wherein the information related to the transmission resource comprises:
time-frequency information of the resource; or
an index of the resource; or
a period of the resource; or
priority information of the resource.

4. The method according to claim 3, wherein the information related to the transmission resource is transmitted in a first field added in a first SCI format, or transmitted in a second SCI format and the second SCI format is dedicated to the information related to the transmission resource.

5. The method according to claim 2, wherein determining the one or more second resources by the first terminal based on the information related to the transmission resources comprises:
obtaining the one or more second resources by the first terminal through the information related to the transmission resource and a reference signal received power (RSRP).

6. The method according to claim 5, wherein obtaining the one or more second resources by the first terminal through the information related to the transmission resource and the reference signal received power (RSRP) comprises:
using one or more third resources in resources other than a resource corresponding to the information related to the transmission resource as the one or more second resources by the first terminal, wherein the one or more third resources comprise: an unoccupied resource, and/or an occupied resource having the RSRP less than a first threshold.

7. The method according to claim 2, wherein determining the first resource by the first terminal based on the one or more second resources comprises:
selecting the first resource in the one or more second resources by the first terminal through random selection; or
obtaining the first resource by the first terminal through a received signal strength indication (RSSI) of the one or more second resources.

8. The method according to claim 7, wherein obtaining the first resource by the first terminal through the RSSI of the one or more second resources comprises:
sorting all of the one or more second resources based on the RSSI of the one or more second resources by the first terminal to obtain a sorting result;
determining one or more fourth resources based on the sorting result, wherein an RSSI of any resource in the one or more fourth resources is less than an RSSI of another resource other than the one or more fourth resources in the one or more second resources;
selecting the first resource from the one or more fourth resources through random selection by the first terminal.

9. The method according to claim 1, wherein the resource-sensing comprises: full sensing; or periodic partial sensing; or continuous partial sensing.

10. The method according to claim 9, wherein performing the resource-sensing on detecting the SCI transmitted by the second terminal by the first terminal comprises detecting the SCI transmitted by the second terminal by the first terminal in all slots in a case that the resource-sensing is the full sensing; or,
determining the first resource by the first terminal through performing the resource-sensing on detecting the SCI transmitted by the second terminal comprises detecting the SCI transmitted by the second terminal on a first sensing occasion by the first terminal in a case that the resource-sensing is the periodic partial sensing, wherein the first sensing occasion is a duration or a slot that occurs based on a sensing period; or
determining the first resource by the first terminal through performing the resource-sensing on detecting the SCI transmitted by the second terminal comprises: detecting the SCI transmitted by the second terminal by the first terminal on a second sensing occasion in a case that the resource-sensing is the continuous partial sensing, wherein the second sensing occasion is a specific duration or slot.

11. The method according to claim 1, further comprising: determining whether to determine the first resource by the first terminal through the resource-sensing or the random selection according to at least one of following:
a sensing capability of the first terminal;
positioning delay requirement information;
energy-saving requirement information;
priority information;
resource congestion information.

12. The method according to claim 1, wherein the first resource pool is orthogonal to a second resource pool, and the second resource pool is a dedicated resource pool for determining the transmission resource of the S-PRS through the resource-sensing.

13. A method of receiving a sidelink positioning reference signal, comprising:
receiving a sidelink positioning reference signal (S-PRS) by a second terminal; wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

14. The method according to claim 13, wherein the resource-sensing comprises: full sensing; or periodic partial sensing; or continuous partial sensing.

15. An apparatus of transmitting a sidelink positioning reference signal, comprising:
a memory, a transceiver, and a processor; wherein the memory is configured to store a program instruction; the transceiver is configured to transmit and receive data under control of the processor; the processor is configured to read the program instruction in the memory and perform following:
determining a first resource through performing resource-sensing on detecting sidelink control information (SCI) transmitted by a second terminal, or through random selection in a first resource pool;
controlling the transceiver to transmitg a sidelink positioning reference signal (S-PRS) on the first resource, wherein the first resource pool is a dedicated resource pool for randomly selecting a transmission resource of the S-PRS.

16. The apparatus according to claim 15, wherein the processor is configured to read the program instruction in the memory and further perform following:
obtaining indication information comprised in the SCI, wherein the indication information is configured to indicate information related to the transmission resource of the S-PRS;
determining one or more second resources based on the information related to the transmission resource;
determining the first resource based on the one or more second resources.

17. The apparatus according to claim 16, wherein the information related to the transmission resource comprises:
time-frequency information of the resource; or
an index of the resource; or
a period of the resource; or
priority information of the resource.

18. The apparatus according to claim 17, wherein the information related to the transmission resource is transmitted in a first field added in a first SCI format, or transmitted in a second SCI format and the second SCI format is dedicated to the information related to the transmission resource.

19. The apparatus according to claim 16, wherein the processor is configured to read the program instruction in the memory and further perform following:
obtaining the one or more second resources through the information related to the transmission resource and a reference signal received power (RSRP).

20. The apparatus according to claim 19, wherein the processor is configured to read the program instruction in the memory and further perform following:
using one or more third resources in resources other than a resource corresponding to the information related to the transmission resource as the one or more second resources, wherein the one or more third resources comprise: an unoccupied resource, and/or an occupied resource having the RSRP less than a first threshold.

21. The apparatus according to claim 16, wherein the processor is configured to read the program instruction in the memory and further perform following:
selecting the first resource in the one or more second resources through random selection; or
obtaining the first resource through a received signal strength indication (RSSI) of the one or more second resources.

22. The apparatus according to claim 21, wherein the processor is configured to read the program instruction in the memory and further perform following:
sorting all of the one or more second resources based on the RSSI of the one or more second resources to obtain a sorting result;
determining one or more fourth resources based on the sorting result, wherein an RSSI of any resource in the one or more fourth resources is less than an RSSI of another resource other than the one or more fourth resources in the one or more second resources;
selecting the first resource from the one or more fourth resources through random selection.

23. The apparatus according to claim 15, wherein the resource-sensing comprises: full sensing; or periodic partial sensing; or continuous partial sensing.

24. The apparatus according to claim 23, wherein the processor is configured to read the program instruction in the memory and further perform following:
detecting the SCI transmitted by the second terminal in all slots in a case that the resource-sensing is the full sensing; or
detecting the SCI transmitted by the second terminal on a first sensing occasion in a case that the resource-sensing is the periodic partial sensing, wherein the first sensing occasion is a duration or a slot that occurs based on a sensing period; or
detecting the SCI transmitted by the second terminal on a second sensing occasion in a case that the resource-sensing is the continuous partial sensing, wherein the second sensing occasion is a specific duration or slot.

25. The apparatus according to claim 15, wherein the processor is configured to read the program instruction in the memory and further perform following:
determining whether to determine the first resource through the resource-sensing or the random selection according to at least one of following:
a sensing capability of the first terminal;
positioning delay requirement information;
energy-saving requirement information;
priority information;
resource congestion information.

26. The apparatus according to claim 15, wherein the first resource pool is orthogonal to a second resource pool, and the second resource pool is a dedicated resource pool for determining the transmission resource of the S-PRS through the resource-sensing.

27. An apparatus of transmitting a sidelink positioning reference signal, comprising:
a first processing module, configured to determine a first resource through performing resource-sensing on detecting sidelink control information (SCI) transmitted by a second terminal, or through random selection in a first resource pool;
a transmitting module, configured to transmit a sidelink positioning reference signal (S-PRS) on the first resource, wherein the first resource pool is a dedicated resource pool for randomly selecting a transmission resource of the S-PRS.

28. An apparatus of receiving a sidelink positioning reference signal, comprising:
a memory, a transceiver, and a processor; wherein the memory is configured to store a program instructions; the transceiver configured to transmit and receive data under control of the processor; the processor is configured to read the program instruction in the memory, and the transceiver is configured to perform following:
receiving a sidelink positioning reference signal (S-PRS); wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

29. An apparatus of receiving a sidelink positioning reference signal, comprising:
a receiving module, configured to receive a sidelink positioning reference signal (S-PRS); wherein the S-PRS is transmitted by a first terminal on a first resource, and the first resource is determined by the first terminal through performing resource-sensing on detecting sidelink control information (SCI) transmitted by the second terminal or by the first terminal through random selection in a first resource pool, wherein the first resource pool is a dedicated resource pool for randomly selecting a transmission resource of the S-PRS.

30. A processor-readable storage medium, wherein the processor-readable storage medium stores a computer program, and the computer program is configured to cause the processor to perform the method of transmitting a sidelink positioning reference signal according to any one of claims 1-12, or the method of receiving a sidelink positioning reference signal according to claim 13 or 14.
